# EUROPEAN PATENT SPECIFICATION

(11) **EP 0 946 770 B1**
(45) Date of publication and mention of the grant of the patent: **31.05.2000**
(21) Application number: 97913536.5
(22) Date of filing: 19.11.1997
(51) Int. Cl.: C22B 43/00, B09C 1/06, H01M 6/52, F27B 5/04, A62D 3/00

(54) **INSTALLATION AND METHOD FOR REMOVING MERCURY FROM WASTE MATERIALS BY VACUUM DISTILLATION**
ANLAGE UND VERFAHREN ZUR ENTFERNUNG VON QUECKSILBER AUS ABFALLSTOFFEN MITTELSVAKUUMDESTILLATION
INSTALLATION ET PROCEDE D'ENLEVEMENT DE MERCURE A PARTIR DE DECHETS, PAR DISTILLATION SOUS VIDE

(30) Priority: 19.11.1996 NL 1004566
(43) Date of publication of application: 06.10.1999
(73) Proprietor: Begemann Holding B.V., 3312 AT Dordrecht (NL)
(72) Inventor: HAVERKAMP BEGEMANN, Roeland, NL-3312 AT Dordrecht (NL)
(74) Representative: de Bruijn, Leendert C.
(86) International application number: NL9700630
(87) International publication number: WO9822628

(56) References cited:
- EP-A- 0 420 367
- DE-A- 3 243 813
- FR-A- 2 422 726
- GB-A- 1 162 328
- NL-A- 9 100 119
- US-A- 5 184 950
- DATABASE WPI Section Ch, Week 9520 Derwent Publications Ltd., London, GB; Class L03, AN 95-153426 XP002034617 & SU 1 838 440 A (ALPERT V A) , 30 August 1993 cited in the application
- PATENT ABSTRACTS OF JAPAN vol. 015, no. 141 (C-0822), 10 April 1991 & JP 03 023218 A (MATSUSHITA ELECTRIC IND CO LTD), 31 January 1991,
- PATENT ABSTRACTS OF JAPAN vol. 010, no. 235 (C-366), 14 August 1986 & JP 61 069929 A (KOGAI BOSHI KIKI KK;OTHERS: 01), 10 April 1986,

## Description

The invention relates to an installation for removing mercury from waste materials by vacuum distillation, comprising:
an electrically heatable heating device in which waste material can be exposed to elevated temperature,
a cooling device for cooling the vapour removed from said heating device thereby causing condensation of mercury,
a connection between said heating device and said cooling device,
collecting means for collecting the liquid mercury flowing out the cooling device, and a vacuum pump connected to the collecting vessel via a suction line.

Such an installation is disclosed in US-A-5184950. A first embodiment, described in this publication, comprises an inclined rotatable furnace connected through a rotary joint to the cooling/condensation device. A second embodiment comprises a horizontal non rotatable furnace provided at its side with a lid.

The aim of the invention is to improve the security and the efficiency of the mercury removal and to provide an installation with which the mercury removal process can take place portion by portion in hermetically sealed chambers without it being possible for spurious air containing mercury vapour to pass into the atmosphere.

According to the invention the installation is to this end characterized in that the heating device consists of at least three mobile furnaces arranged around the common cooling device and collecting vessel, each furnace being provided at its top with a hermetically sealable lid and being non rotatably connected to the cooling device by a separate line debouching into the side wall of the concerning furnace.

So as to be able to collect the mercury effectively, each line between a mobile furnace and the cooling device includes a stand pipe having a mercury trap in its lower part.

To prevent mercury condensing on the inside of the lids of the furnace, said lids can be pan- or dome-shaped and extend inwards into the furnace.

For further removal of substances a water filter is incorporated in the line between the distillation vessel and the vacuum pump, and an oil/water separation and one or more carbon filters for the off-gases are connected in succession on the output side of the vacuum pump.

The method according to the invention can be carried out effectively and rapidly and leads to a virtually mercury-free ambient atmosphere. The portion-by-portion procedure, such that no spurious air can pass into the environment, is important. The cycle time is completely under control.

The invention will now be explained in more detail with reference to the figures.

Figure 1 shows a side view of a mercury removal installation according to the invention.

Figure 2 shows a view of a furnace to be used in said installation.

Figure 3 shows a floor plan of the entire installation.

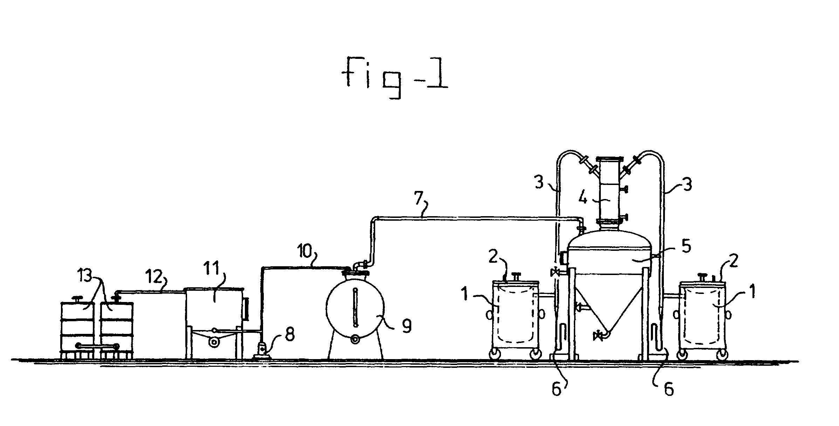

The installation shown in Figure 1 comprises a number of mobile furnaces 1, which are sealed with a lid 2 and in which mercury-containing waste (sludge, complete batteries, pulverised fluorescent tubes, catalyst material and the like) is present. The furnaces are each connected to their own standpipe 3, the top of which is connected to a common heat exchanger 4 which is cooled by cooling water and is mounted centrally on a distillation vessel 5. There is a connection between the heat exchanger and the distillation vessel. The bottom of the standpipes 3 comprises a mercury trap 6.

The distillation vessel is connected to a vacuum pump 8 via a suction line 7, a water filter 9 being incorporated in the suction line. The atmospheric pressure side of the suction pump 8 is connected by a line 10 to an oil/water separator 11 and the latter, in turn, is connected via a line 12 to a number of carbon filters 13.

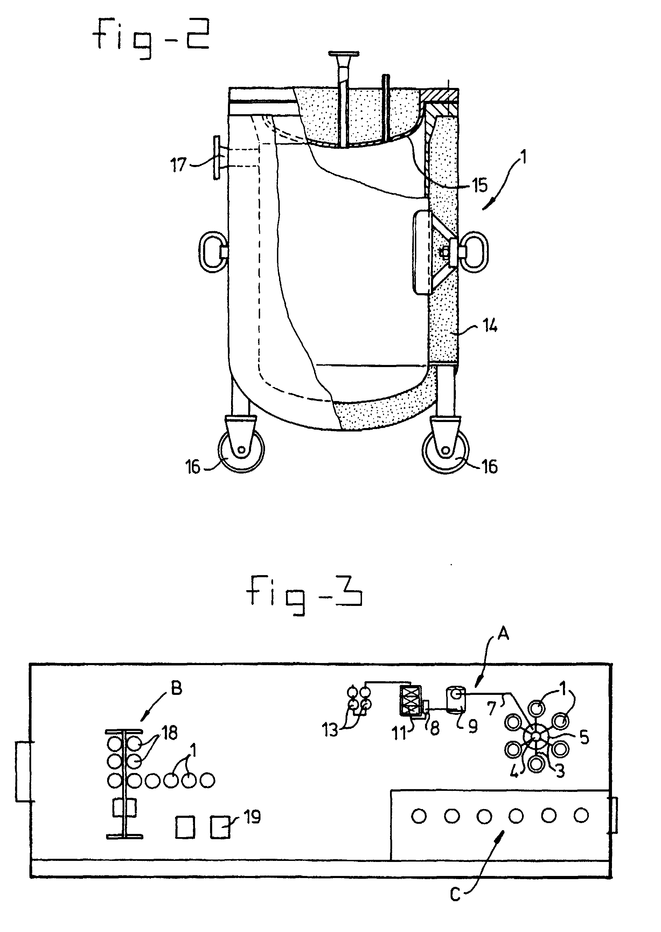

The furnaces 1 (see Figure 2) have an electrically heatable casing 14 which is insulated by a jacket consisting of, for example, mineral wool. The removable lid 15, which is able to seal the furnace hermetically, is in the shape of a pan or dome facing towards the inside of the furnace.

The wheels are indicated by 16 and the connecting stub to be connected to standpipe 3 is indicated by 17. Electric resistance wires, which are not shown, are arranged in the casing 14.

In the floor plan according to Figure 3 the mercury removal installation shown in Figure 1 is indicated by A, the loading/unloading station by B and the area for cooling the furnaces by C.

Drums 18 containing mercury-containing waste are in the loading/unloading station B ready to be emptied by a mobile crane into relatively small furnaces 1, from which the lids 2 have been carefully removed. After filling the furnaces with the waste and refitting the lids 2 to the furnaces, the furnaces 1 are wheeled to a location around a distillation vessel 5 and each furnace is connected by means of a standpipe 3 to the heat exchanger 4 so as to form a cluster.

The vacuum pump 8 is switched on and the electric heating for the furnaces 1 is then switched on. A vacuum is generated in the furnaces as a result. If the waste is waste in sludge form or ground fluorescent tubes or catalyst material, a vacuum of at least 100 mbar and a temperature of at least 360 °C (for example 400 °C) are required to vaporise the mercury from the waste. Such a vacuum can be achieved using a so-called liquid ring pump. A vacuum of at least 10 mbar is needed to remove mercury from non-ground complete batteries at the same temperature. In this case the vacuum pump 8 is supplemented by a so-called Roots pump.

The vapours from the furnaces 1 first pass into the relatively cool standpipes 3 where a significant proportion of the mercury condenses and flows into the mercury trap 6, from which it can be removed occasionally. The residual vapours are cooled in the heat exchanger 4, water, light and heavy aromatic compounds and residual mercury condensing and flowing into the distillation vessel. The liquids can be tapped off from the distillation vessel periodically and separately, at various levels.

To prevent harmful gases passing into the ambient atmosphere, the gases withdrawn from the distillation vessel flow through, successively, the water filter 9, the oil/water separator 11 and the carbon filters 13. Purified air can then be blown into the atmosphere without risk.

A dry, purified product remains behind in the furnaces 1. After being held for some time in the cooling region C, the furnaces are wheeled back to the loading/unloading station B and emptied. The dry, purified material is stored in containers 19.

It can be seen from the floor plan according to Figure 3 that six furnaces with standpipes 3 have been placed in a circle around the distillation vessel 5 and form a cluster. Of course, it is possible for various clusters of furnaces, standpipes and distillation vessels to be dealt with at the same time and to be connected to the same filters 9, 13 and the separator 11.

The most important advantages of the installation described are:
- that the portion-by-portion treatment of the waste material leads to a situation in which no mercury-containing vapours such as spurious air can pass into the ambient atmosphere,
- that the cycle time is under control,
- that, despite the portion-by-portion treatment, the procedure can be carried out very efficiently and rapidly as a result of the use of relatively small mobile furnaces,
- that when a special vacuum pump is used mercury can be removed from intact batteries.

## Claims

1. Installation for removing mercury from waste materials by vacuum distallation, comprising:
an electrically heatable heating device (1) in which waste material can be exposed to elevated temperature,
a cooling device (4) for cooling the vapour removed from said heating device thereby causing condensation of mercury,
a connection between said heating device and said cooling device,
collecting means (5) for collecting the liquid mercury flowing out the cooling device, and
a vacuum pump (8) connected to the collecting vessel (5) via a suction line (7, 10),
characterized in that the heating device consists of at least three mobile furnaces (1) arranged around the common cooling device and collecting vessel (5), each furnace (1) being provided at its top with a hermetically sealable lid (2) and being non rotatably connected to the cooling device (4) by a separate line (3) debouching into the side wall of the concerning furnace (1).

2. Installation according to claim 1, characterized in that each line between the mobile furnace and the cooling unit includes a standpipe (8) having a mercury trap (6) in its lower part.

3. Installation according to claim 1 or 2, characterized in that the said cooling unit (4) consists of a heat exchanger which is mounted on the distillation vessel (5) and can be cooled with cooling water.

4. Installation according to claim 1 or claim 2, characterized in that the lids of the furnaces (1) are pan- or dome-shaped and extend inwards into the furnaces (1).

5. Installation according to one of the preceding claims, characterized in that a water filter (9) is incorporated in the line (10) between the distillation vessel (5) and the vacuum pump (8).

6. Installation according to one of the preceding claims, characterized in that an oil/water separator (11) and one or more carbon filters (13) for the off-gases are connected in succession on the output side of the vacuum pump (8).

## Patentansprüche

1. Anlage zum Entfernen von Quecksilber aus Abfallstoffen mittels Vakuum-Destillation, umfassend:
eine elektrisch heizbare Heizvorrichtung (1), in welcher Abfallstoffe einer hohen Temperatur ausgesetzt werden können,
eine Kühlungsvorrichtung (4) zum Kühlen des Dampfes, welcher von der Heizvorrichtung entfernt wurde, wodurch verursacht wird, daß Quecksilber kondensiert,
eine Verbindung zwischen der Heizvorrichtung und der Kühlungsvorrichtung, eine Sammeleinrichtung (5) zum Sammeln des flüssigen Quecksilbers, welches aus der Kühlungsvorrichtung herausfließt, und
eine Vakuumpumpe (8), welche mit dem Sammelbehälter (5) über eine Saugleitung (7, 10) verbunden ist,
dadurch gekennzeichnet, daß die Heizvorrichtung mindestens drei bewegliche Öfen (1), welche um die gemeinsame Kühlungsvorrichtung und einen Sammelbehälter (5) herum angeordnet sind, aufweist, wobei jeder Ofen (1) an seiner Oberseite mit einem hermetisch verschließbaren Deckel (2) versehen ist und nicht-drehbar mit der Kühlungsvorrichtung (4) durch eine separate Leitung (3) verbunden ist, welche in die Seitenwand des betreffenden Ofens (1) mündet.

2. Anlage nach Anspruch 1, dadurch gekennzeichnet, daß jede Leitung zwischen dem beweglichen Ofen und der Kühlungseinheit eine Standleitung (8) umfaßt, welche einen Quecksilber-Abscheider (6) in ihrem unteren Teil aufweist.

3. Anlage nach Anspruch 1 oder 2, dadurch gekennzeichnet, daß die Kühlungseinheit (4) einen Wärmetauscher umfaßt, welcher auf den Destillationsbehälter (5) montiert ist und mit Kühlwasser gekühlt werden kann.

4. Anlage nach Anspruch 1 oder Anspruch 2, dadurch gekennzeichnet, daß die Deckel der Öfen (1) pfannen- oder domförmig sind und sich nach innen in die Öfen (1) hinein erstrecken.

5. Anlage nach einem der vorherigen Ansprüche, dadurch gekennzeichnet, daß ein Wasserfilter (9) in der Leitung (10) zwischen dem Destillationsbehälter (5) und der Vakuumpumpe (8) eingebaut ist.

6. Anlage nach einem der vorherigen Ansprüche, dadurch gekennzeichnet, daß ein Öl-/Wasser-Abscheider (11) und einer oder mehrere Kohlefilter (13) für die Abgase in Reihe an der Auslaßseite der Vakuumpumpe (8) angeschlossen sind.

## Revendications

1. Installation pour éliminer le mercure dans des déchets par distillation sous vide, comportant :
un dispositif de chauffage pouvant chauffer électriquement (1) dans lequel des déchets peuvent être exposés à une température élevée,
un dispositif de refroidissement (4) pour refroidir la vapeur extraite par ledit dispositif de chauffage afin de produire ainsi une condensation du mercure,
une liaison entre ledit dispositif de chauffage et ledit dispositif de refroidissement,
des moyens collecteurs (5) pour collecter le mercure liquide s'écoulant à l'extérieur du dispositif de refroidissement, et une pompe à vide (8) reliée au récipient collecteur (5) via une ligne d'aspiration (7, 10),
caractérisée en ce que le dispositif de chauffage comporte au moins trois fours mobiles (1) agencés autour du dispositif de refroidissement et du récipient collecteur (5) communs, chaque four (1) étant muni à son sommet d'un couvercle pouvant être scellé hermétiquement (2) et étant relié de manière non-rotative au dispositif de refroidissement (4) par une ligne séparée (3) débouchant dans la paroi intérieure du four concerné (1).

2. Installation selon la revendication 1, caractérisée en ce que chaque ligne située entre le four mobile et l'unité de refroidissement comporte un tuyau ascendant (8) ayant un piège à mercure (6) dans sa partie inférieure.

3. Installation selon la revendication 1 ou 2, caractérisée en ce que ladite unité de refroidissement (4) comporte un échangeur de chaleur qui est monté sur le récipient de distillation (5) et peut être refroidi par de l'eau de refroidissement.

4. Installation selon la revendication 1 ou 2, caractérisée en ce que les couvercles des fours (1) sont en forme de bac ou en forme de dôme et s'étendent vers l'intérieur dans les fours (1).

5. Installation selon l'une quelconque des revendications précédentes, caractérisée en ce qu'un filtre à eau (9) est incorporé dans la ligne (10) entre le récipient de distillation (5) et la pompe à vide (8).

6. Installation selon l'une quelconque des revendications précédentes, caractérisée en ce qu'un séparateur huile/eau (11) et un ou plusieurs filtres à carbone (13) pour les gaz perdus sont reliés en série sur le côté de sortie de la pompe à vide (8).
